# EUROPEAN PATENT APPLICATION

(11) **EP 4 767 817 A1**
(43) Date of publication of application: **01.07.2026**
(21) Application number: 25208210.2
(22) Date of filing: 13.10.2025
(51) Int. Cl.: A01J 5/017

(54) **MILKING APPARATUS**

(30) Priority: 24.12.2024 NZ 24817616
(71) Applicant: Waikato Milking Systems Limited Partnership, Hamilton 3288 (NZ)
(72) Inventor: SINGLETON, CHRISTOPHER, 3288 HAMILTON (NZ); REED, HENRY, 3288 HAMILTON (NZ); PHARAOH, JIM, 3288 HAMILTON (NZ); MIKKELSON, JAMIE, 3288 HAMILTON (NZ); MOORE, SIMON, 3288 HAMILTON (NZ)
(74) Representative: Araujo, Daniel

(57) **Abstract**

A problem with milking dairy cows is that fitting and removing milking teat cups can be time consuming and cause inefficiencies. It is an object of a preferred embodiment to go at least some way towards address this. The invention incorporates an apparatus for delivering milking teat cups to a dairy cow. It has a housing 1, an extender arm 3, a holster 4, teat cups 5, cords 8, and rollers 14. The arm 3 carries the holster 4 and cups 5 between stowed and extended positions. Each cord 8 is engaged with a respective one of the rollers 14, is connected to a respective one of the cups 5, extends to the holster, and can be drawn in by movement of the respective roller 14. Each roller 14 allows its cord 8 to extend sufficiently to enable the teat cup connected to that cord to be removed from the holster and engaged with a cow's teat for milking. Further, each roller 14 is adapted to draw-in its cord to pull the associated cup 5 to a docking position on the holster.

## Description

### FIELD OF INVENTION

This invention relates to apparatus for use in milking animals. Preferred embodiments relate to the milking of dairy cows, for example on a rotary or other milking platform.

### BACKGROUND

When dairy cows are milked on a commercial basis the process typically involves engaging the cow's teats with a set of teat-cups. The cups are part of a cluster that also incorporates a claw.

The traditional arrangement is that a long pulse tube connects the claw to a remote pulsator, and short pulse tubes connect the claw to the teat-cups. The long and short pulse tubes deliver pulsation force to the cups.

The traditional arrangement is also that the cups are connected to the claw by short milk tubes, and the claw is connected to a storage vat by a long milk tube. The short and long milk tubes are under vacuum pressure.

When pulsation pressure is applied to the cups via the long and short pulse tubes, the interior portions of the cups pulsate to draw milk from the teats. The milk flows to the claw under vacuum through the short milk tubes and is then drawn away from the claw under vacuum to the storage vat via the long tube.

In a commercial milking environment, the teat cups must be fitted to each cow about to be milked and removed afterwards so that they are ready for use with the next cow. When many cows are milked in succession, the process of fitting and removing teat cups can be labour intensive and a cause of inefficiency.

### OBJECT

It is an object of preferred embodiments of the invention to go at least some way towards addressing the above problem. While this applies to preferred embodiments, the object of the invention per se is more general in that it is to provide the public with a useful choice. Accordingly, any objects or advantages applicable to any preferred embodiment should not be interpreted as a limitation on the scope of claims expressed broadly.

### DEFINITIONS

The term "comprises" or "has", if and when used in this document in relation to one or more features, should not be seen as excluding the option of there being additional unmentioned features. The same applies to derivative terms such as "comprising" and "having".

The term "substantially" or "approximately" or "about" should be take to mean up to ±1%, up to ±2%, up to ±3%, up to 4%, up to ±5%, up to ±10%, or up to ±15%, of the value or parameter associated with it.

### SUMMARY OF THE INVENTION

### First Aspect - Docking of Teat Cups

Apparatus for delivering milking teat cups to an animal to be milked (eg a dairy cow), comprising:
- a housing;
- an extender arm;
- a holster;
- a set of teat-cups removably engaged with the holster;
- connector threads (eg cords or strings); and
- thread turn guides (eg rollers);
arranged such that:
∘ the extender arm is adapted to carry the holster and teat-cups between a retracted stowed position and an extended operative position where the holster and teat-cups are presented for use outside the housing;
∘ each thread is engaged with and extends at least partially around a respective one of the thread turn guides, is connected to a respective one of the teat-cups, extends to the holster, and can be drawn in by movement of a respective one of the thread turn guides;
∘ each thread turn guide is adapted to allow its respective thread to extend sufficiently to enable the teat-cup connected to it to be removed from the holster and engaged with the animal's teat for milking; and
∘ each thread turn guide is adapted to move to draw-in its respective thread to pull the teat-cup connected to that thread to a docking position of the holster to catch the teat-cup as it drops from the teat when in use.

### Second Aspect - Play-Out of Milk Tubes

Apparatus for delivering milking teat-cups to an animal to be milked (eg a dairy cow), comprising:
- a housing;
- an extender arm;
- a holster;
- a set of teat-cups removably engaged with the holster;
- milk tubes; and
- tube turn guides (eg rollers);
arranged such that:
∘ the extender arm is adapted to carry the holster and teat-cups between a retracted stowed position and an extended operative position where the holster and teat-cups are presented for use outside the housing;
∘ each milk tube is connected to a respective one of the teat-cups and is engaged or adapted to engage with and proceed around a respective one of the tube turn guides (eg rollers) to double back on itself when in a stowed disposition within the housing; and
∘ each tube turn guide is adapted to move at least linearly in sympathy with the extender arm so that when the extender arm moves outwards the associated milk tube plays out and, when the extender arm retracts, the milk tube returns to its stowed disposition.

### Third Aspect - Teat Cup Sensor for Control Vacuum Pressure

Apparatus for delivering milking teat cups to an animal to be milked (eg dairy cow), comprising:
- a housing;
- an extender arm;
- a holster;
- a set of teat-cups removably engaged with the holster;
- a teat-cup sensor; and
- a vacuum switch;
arranged such that:
∘ the extender arm is adapted to carry the holster and teat-cups between a retracted stowed position and an extended operative position where the holster and teat-cups are presented for use outside the housing;
∘ the sensor is adapted to detect when the teat-cups are engaged with the cradle; and
∘ the switch is adapted to turn on vacuum pressure to the teat-cups when the sensor detects the teat-cups are disengaged with the cradle and to turn off such pressure when the sensor detects that they are engaged with the cradle.

### Fourth Aspect - Cartridge + Chassis Arrangement

Apparatus for delivering milking teat cups to an animal to be milked (eg a dairy cow), comprising:
- a chassis;
- a lid (optionally with side walls); and
- a cartridge having:
   ▪ an extender arm adapted to move between retracted stowed and extended operative positions; and
   ▪ a holster adapted to move with the extender arm; and
   ▪ optionally thread turn guides and tube turn guides as noted above;
arranged such that:
∘ the lid is adapted to be releasably engaged with the chassis to substantially cover the cartridge;
∘ the cartridge is adapted to be moved on cartridge rollers (eg wheels) to a docked position inside the chassis; and
∘ the cartridge is also adapted to be subsequently reversibly moved by way of the cartridge rollers to locate it clear of the chassis.

### Fifth Aspect - Steam Cleaning of Teat Cups

Apparatus for delivering milking teat cups to an animal to be milked (eg a dairy cow), comprising:
- a housing;
- an extender arm;
- a holster;
- a set of teat-cups removably engaged with the holster;
- teat-cup washer covers; and
- a cleaning fluid (eg steam) applicator;
arranged such that:
∘ the extender arm is adapted to carry the holster and teat-cups between a retracted stowed position and an extended operative position where the holster and teat-cups are presented for use outside the housing;
∘ the teat-cup washer covers are adapted to move to each engage and close a respective one of the teat-cups;
∘ the cleaning fluid applicator is adapted to emit cleaning fluid (eg steam) into the teat-cups to disinfect them; and
∘ the teat-cup washer covers are adapted to move clear of the teat-cups when they have been disinfected by the cleaning fluid (eg steam).

### Supplementary Features

The five independent aspects above can be used in milking apparatus alone or in any combination of two or more of them. Regardless of whether they are combined in this way, any of them may be used in combination with one or more of the following options.

Optionally each thread turn guide comprises a roller and each connector thread is able to extend outside the housing to a different degree to the others.

Optionally each teat cup has a protruding docking hub and the thread for that cup extends from the hub to and through a respective docking port of the holster.

Optionally each thread roller is adapted to pull a respective one of the docking hubs into its docking port.

Optionally each docking hub comprises a generally tapered lower portion shaped to fit into its respective docking port.

Optionally each thread turn guide is adapted to be driven backwards and forwards to facilitate drawing-in and playing-out of the threads and cups.

Optionally the apparatus is adapted to sense when milking of the animal has finished and, in response to this, to automatically turn off vacuum pressure to the milk tubes and to simultaneously or subsequently cause the threads to pull the teat cups into docked engagement with the holster.

Optionally the apparatus is adapted to cause the threads to pull the teat-cups into their docking positions such that they are caught by the holster before they can reach the deck.

Optionally the apparatus comprises electronic control means adapted to determine when milking has finished and, in response to this, to terminate vacuum pressure to the teat-cups while maintaining pulsation pressure to them to a lesser degree than when the animal is being milked, such that the teat-cups remain engaged with the teats but can be pulled from them more easily than when the animal is being milked.

Apparatus according to any one of the preceding claims, comprising milk tubes and milk tube turn guides (eg rollers), arranged such that each milk tube turn guide is engaged or engageable with one of the milk tubes and is adapted to move linearly and independently of the other milk tube turn guides such that each milk tube can simultaneously extend from the housing to a different degree.

Optionally each milk tube turn guide is rotatable.

Optionally each milk tube turn guide comprises a roller.

Optionally each milk tube incorporates a first conduit adapted to work under vacuum to channel milk away from the respective teat-cup and a second conduit adapted to transmit milking pulsation pressure to that teat-cup.

Optionally the apparatus comprises teat-cup sensor means (eg Hall-effect sensors) adapted to detect when one or more of the teat-cups are docked in the cradle.

### DRAWINGS

Some preferred embodiments of the invention will now be described by way of example and with reference to the accompanying drawings, of which-
- **Figure 1**: is an isometric view of a rotary milking platform divided into a series of bails each containing a milking machine at deck level;
- **Figure 2**: illustrates one of the milking machines when presenting teat-cups ready to be fitted to a cow's udder;
- **Figure 3**: illustrates the milking machine with its teat-cups fitted to the udder;
- **Figure 4**: illustrates cross-sectional detail of a representative one of the milk tubes forming part of the milking machine;
- **Figure 5**: illustrates detail for part of a representative one of the teat-cups;
- **Figure 6**: illustrates a series of rollers forming part of the machine and their connection to the teat cups via a series of cords, in overview at A, and in part close-up at B;
- **Figure 7**: illustrates one of the teat-cups when connected with one of the cords;
- **Figure 8**: illustrates the teat-cup prior to its connection to the cord;
- **Figure 9**: illustrates a teat-cup cradle forming part of the milking machine together with clips for connection to the teat-cups;
- **Figure 10**: illustrates the clips when docked in the cradle;
- **Figure 11**: illustrates internal and external detail of milk tube management features when the cradle and teat-cups are caused to extend outwards;
- **Figure 12**: illustrates similar detail to Figure 11 except that the cradle, teat-cups and milk tubes are retracted;
- **Figure 13**: illustrates internal detail of the cradle, and in particular the location of a position sensor;
- **Figure 14**: illustrates further detail of a representative one of the teat-cups;
- **Figure 15**: illustrates a cartridge and chassis arrangement forming part of the milking machine;
- **Figure 16**: illustrates detail of locking componentry for locking the milking machine's lid to the chassis, when in an unlocked disposition;
- **Figure 17**: illustrates the locking componentry of Figure 16 when locked;
- **Figure 18**: illustrates further detail of the locking componentry and surrounding parts;
- **Figure 19**: illustrates further detail of the locking componentry and surrounding parts;
- **Figure 20**: illustrates detail of the milking machine, and in particular the layout of componentry below the platform (the platform is omitted for clarity);
- **Figure 21**: illustrates the front portion of the milking machine, notionally with its cover transparent, to show detail of teat-cup washing componentry; and
- **Figure 22**: illustrates further detail of the teat-cup washing componentry.

### DETAILED DESCRIPTION

### Milking Machine

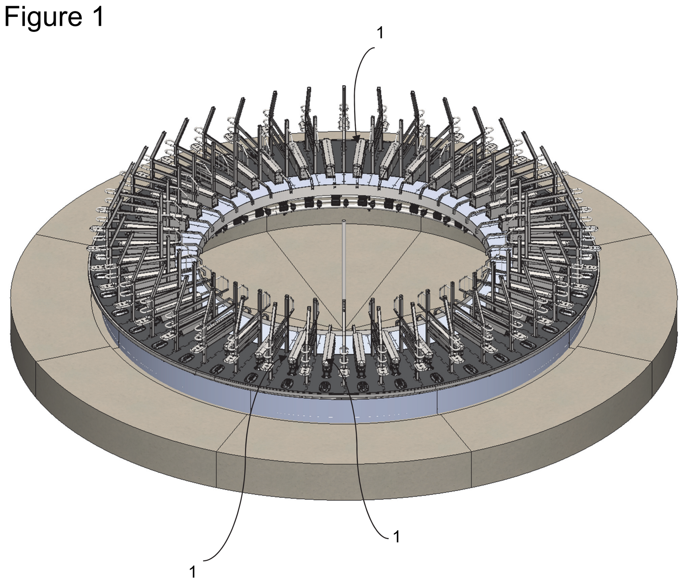

Referring to **Figure 1**, the milking machine 1 is installed in a bail on a rotary milking platform 2. When in use, a dairy cow is ushered into the bail and stands there as it is milked during about one revolution of the platform. At the conclusion of milking the cow is ushered out of the bail, a new cow takes its place, and the process is repeated until all cows in a herd are milked. The platform has a plurality of these bails, each having its own milking machine 1 so that multiple cows can be milked in unison.

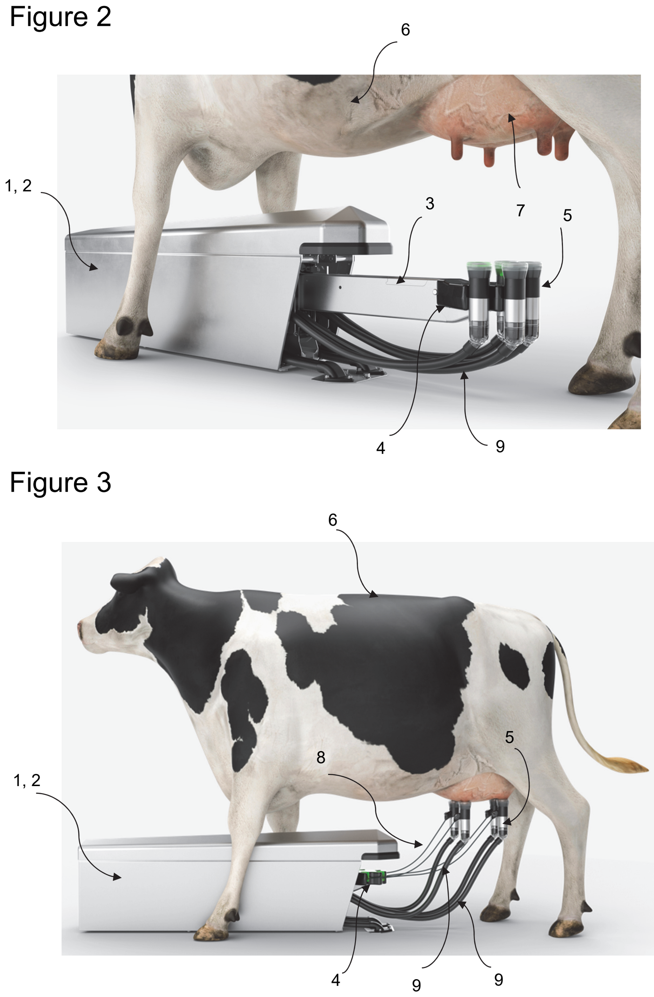

Referring to **Figure 2**, in each case the milking machine 1 is centred in its bale (not shown) and comprises a housing 2 from which a retractable arm 3 extends supporting a holster 4 and a set of milking teat-cups 5. Each cup is releasably docked in its own docking port of the holster.

When a cow 6 is in the bail and is ready to be milked, the retractable arm 3 extends from the housing beneath the cow's belly to carry the holster and teat cups to an elevated position near but lower than the cow's udder 7. At this point the teat-cups 5 have been presented for use.

Referring to **Figure 3**, a human operator (not shown) then takes the teat-cups 5 out of the holster 4 by hand and fits them to the cow's teats for milking the cow. The arm 3 then retracts to stow itself and the holster 4 in the housing 1. This serves to protect the arm 3 and holster 4 from being kicked or stood on by the cow. It also protects these from being contaminated by urine or excrement from the cow.

Even when disengaged from the holster, and including during milking, the cups remain connected to the holster by way of flexible retractable cords 8. In each case the cords are adapted to play-out to span the distance between the holster 4 and the cups 5. In some alternative embodiments the cords may have a degree of elasticity.

When the cow has been milked, the arm 3 extends from the housing 2 to situate the holster 4 substantially beneath and aligned with the cow's udder. The holster then catches the cups as they drop from the teats. After this, the arm 3 retracts to stow itself, the holster 4 and the cups 5, in the housing. The cow 6 is then caused to back-up to exit the bail.

While the cow's legs may brush against the sides of the housing 2 when entering or exiting the bail, it is not able to contact and damage vulnerable components such as the arm 3, holster 4 and teat-cups 5 which are safely stowed inside the housing. They should be considered stowed inside the housing even though the end of the housing nearest the cow's udder may, in at least some embodiments, be substantially open at all times. The teat-cups should also be considered stowed if substantially under cover of the housing even if exposed from the front and sides of the housing.

### Milk Tubes

As shown in Figures 2 & 3, the milking machine 1 also comprises a set of milk tubes 9 under vacuum pressure so that they draw milk away from the cups 5 and towards the vat (not shown) as milking occurs. In the embodiment illustrated, there are two milk tubes 9 either side of the retractable arm 3, so four in total.

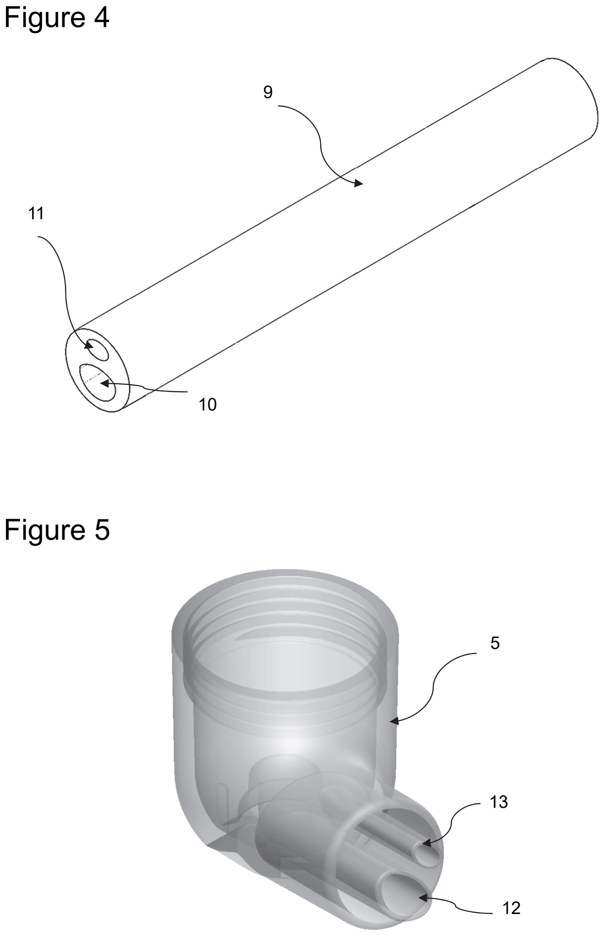

As shown in **Figure 4** each milk tube 9 has dual internal conduits, one being a vacuum conduit 10 for drawing milk away from the cups 4, and one being a pulsation conduit 11 that applies pulsation pressure to repeatedly squeeze liners of the teat-cups to encourage the flow of milk from the teat. Both conduits 10, 11 are oval in transverse cross-section and the outside of the milk tube 9 is circular.

**Figure 5** illustrates the lower part of each teat-cup 5, and in particular its short rigid connective tubes 12, 13 for engaging with the vacuum and pulsation conduits respectively.

As will be appreciated, the milking machine 1 differs from traditional set-ups in that, among other things, it omits a milking claw and reduces the number of tubes needed for applying vacuum and pulsation pressure.

### Docking of Teat Cups

Referring again to Figures 2 & 3, when a cow has been milked, vacuum pressure to the milk tubes and therefore to the teats-cups is turned-off, however pulsation pressure remains, preferably only at a significantly reduced level such that each teat cup is loosely engaged with a respective teat. In the absence of the vacuum, and given the reduced pulsation pressure, the cups 5 are readily pulled from the teats by the cords 8 when they retract.

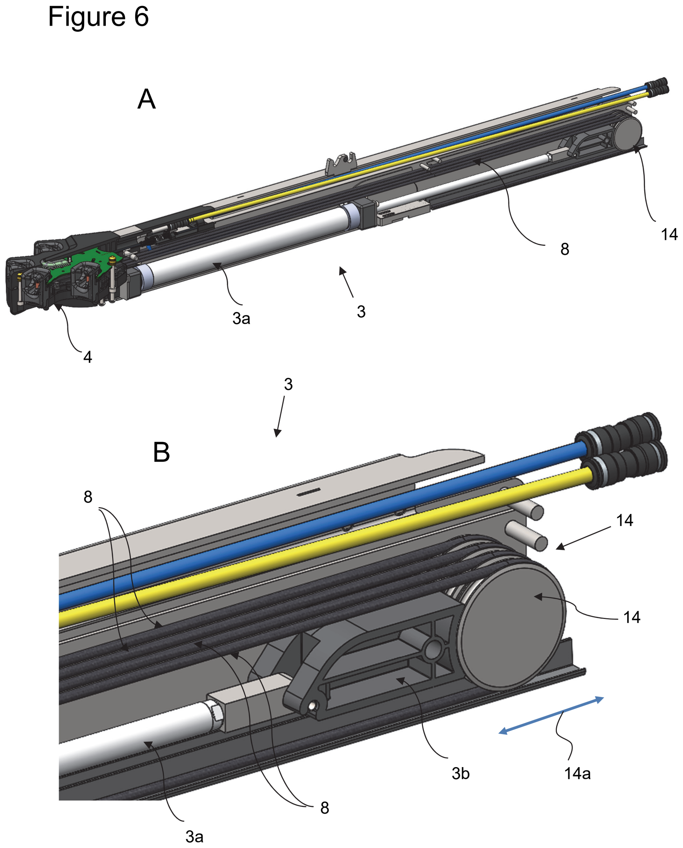

Referring to **Figure 6**, when the cups 5 fall from the teats, each cord 8 is rapidly drawn-in by a respective one of four cord turn guides, which in this example are rollers 14, so that the cup is pulled into its docking position on the holster 4 more or less directly underneath it. The milking machine 1 synchronises both the drop and the drawing in of cords 8 so that the cups are caught by the holster 4 in mid-air and do not reach the platform's deck. Once the milking machine detects that the cups (not shown) are back in the holster, the pulsation pressure is also turned-off and the arm 3 retracts to stow itself, the holster 4 and the cups in the housing 2.

Because the teat-cups 5 are pulled into the holster by the cords 8, it is not necessary for each teat-cup docking position of the holster to be directly beneath the teat cup that docks in it. In this regard, in normal use the cords 8 will simultaneously pull the teat-cups downwards and laterally depending on exactly where the docking position for the teat cup is relative to the teat-cup when it leaves the teat.

When the teat-cups 5 are docked in the holster 4, the cords 8 are tensioned using a ram 3a as illustrated to help maintain them there. The ram is de-energised or in other words exerts no tension on the cords 8 when the cups 5 are required to be pulled out of the holster for fitting on the cow, ie so that the cords 8 can be drawn out to span the distance between the holster and teat cup/teat. The rollers can move back and forth as indicated at 14a. When the cords 8 need to be retracted, the ram 3a rapidly pushes the rollers 14 simultaneously towards the rear of the arm 3 (ie to the right in the drawing) which causes the cups to be pulled back into the holster all at once. In this regard the ram 3a incorporates a push piece 3b which engages all four rollers 14 simultaneously when pushing them backwards to pull the teat-cups into the holster.

When the teat-cups are moved towards the cow's teats, the ram 3a is relaxed, or alternatively moved out of the way, so that each roller 14 can be moved forwards, eg by hand-force pulling the associated teat-cup/cord, sufficiently to allow the cord 8 and teat-cup 5 to reach a teat of the cow for milking. For example, the cow's two back teats will normally be further away than the two front teats, and each roller 14 is able to move forwards independently of and a different amount to the other rollers to facilitate this.

In some alternative embodiments the cords 8, and therefore the teat-cups 5, may be drawn-in by motorised rotating the rollers 14 so that the cords become wound-in, around them, rather than by moving them back laterally as above.

The turning-off of the vacuum pressure when a cow has been milked may be achieved by manually activating a switch. Alternatively, the milking machine may turn off the vacuum automatically in response to detecting the absence or reduction of milk flow through the milk tubes 9. As a further option, the vacuum may be turned off automatically in response to a sensor determining that the bail the cow is in has travelled to a position that is a preset distance from where the cow will exit the bail.

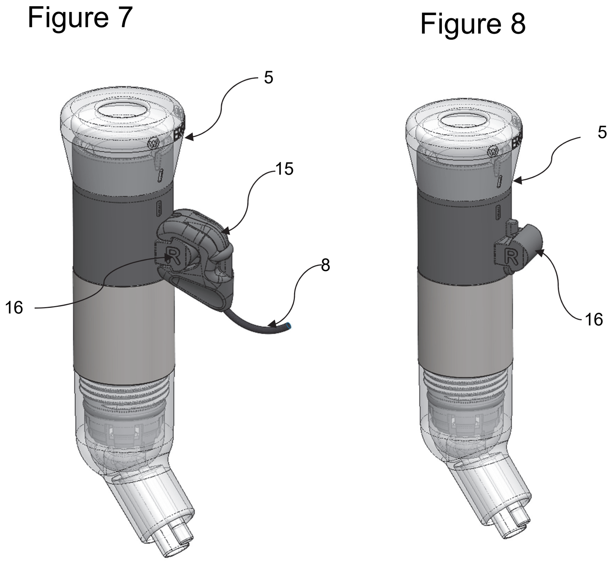

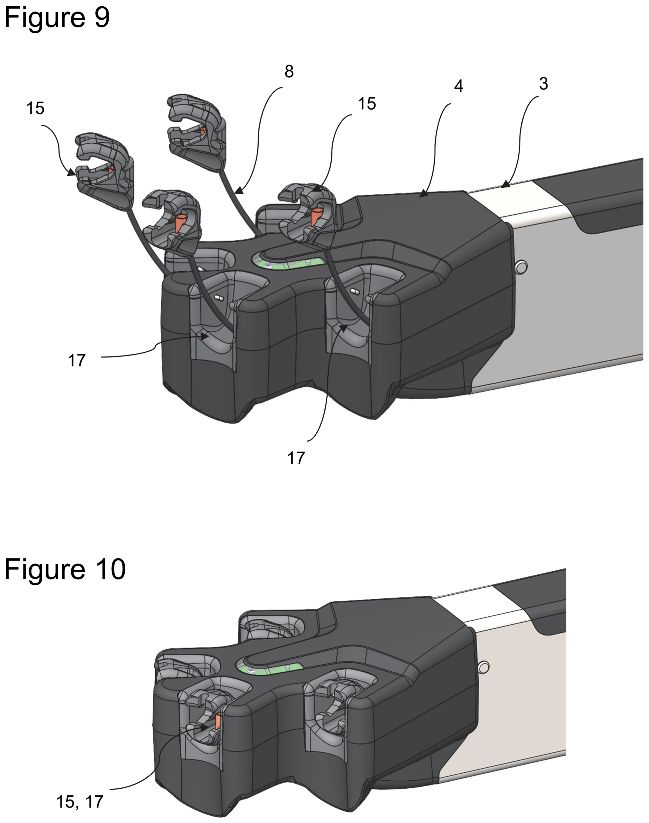

Referring to **Figures 7** - **8**, each cord 8 terminates at a clip 15 which is releasably secured to a docking hub 16 of the teat cup. As shown in **Figure 9****,** each cord 8 passes through a complementary docking recess 17 of the holster 4 enroute to the associated roller 14. Referring to **Figure 10****,** when each cord 8 is wound-in, it pulls the base of the respective clip 15 into the docking recess 17. The tension on the cord 8 and/or the complimentary shapes serve to keep each cup 5 docked until hand force is applied to remove it from the holster. Preferably the lower portion of each clip 15 is generally tapered as shown in Figure 5 to facilitate an easy fit into its corresponding recess 17.

The arrangement is such that the rollers 14 can rotate independently, eg at different rates or degrees, so that the cords 8 can simultaneously extend and retract to different lengths with respect to one another. For example, one cord 8 may be pulled out from the holster 4 more than another so the different teat cups 5 can be used at different distances from the holster.

### Playing-out of the Milk Tubes

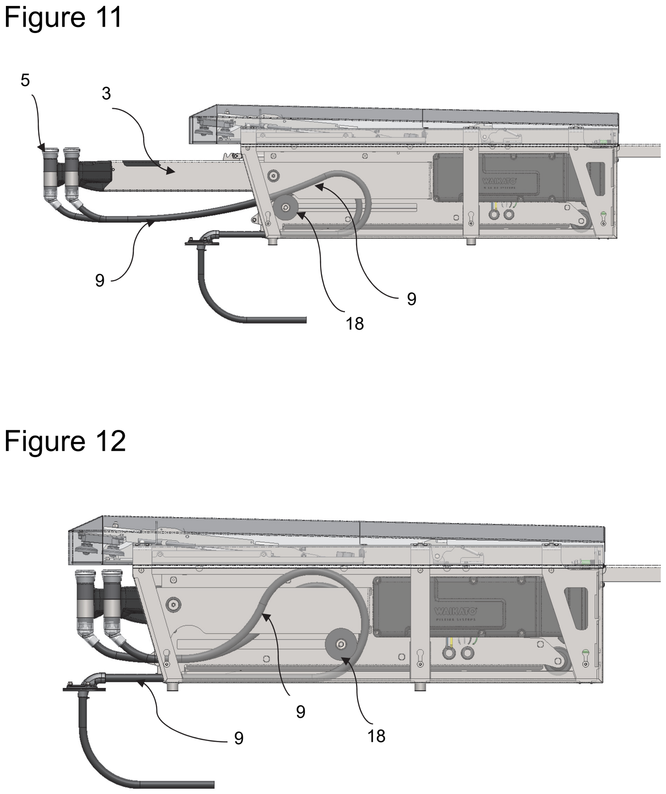

Referring to **Figures 11-12****,** as the arm 3 extends out of the housing 2 it pulls the milk tubes 9 outwards, and as it retracts it moves them back where they came from. The milk tubes 9 therefore need to be able to cope with these movements before and after milking. To facilitate this, each milk tube 9 extends away from its respective cup 5, and around a turn-guide, for example a milk tube roller 18, and doubles back on itself. The roller 18 is arranged to move linearly under hydraulic pressure towards the cow's hindlegs as the arm 3 extends, and in reverse when the arm 3 retracts to its stowed position. This enables the milk tubes 9 to be played-out when needed, and then neatly gathered in afterwards. Preferably there is a dedicated roller 18 for each milk tube 9, and these are all free to rotate clockwise and anticlockwise to accommodate movement of the respective milk tube 9. Preferably two of the rollers 18 are arranged to one side of the retractable arm 3 and two of them are to the other side, to facilitate a tidy and compact arrangement of components.

### Docking Sensor

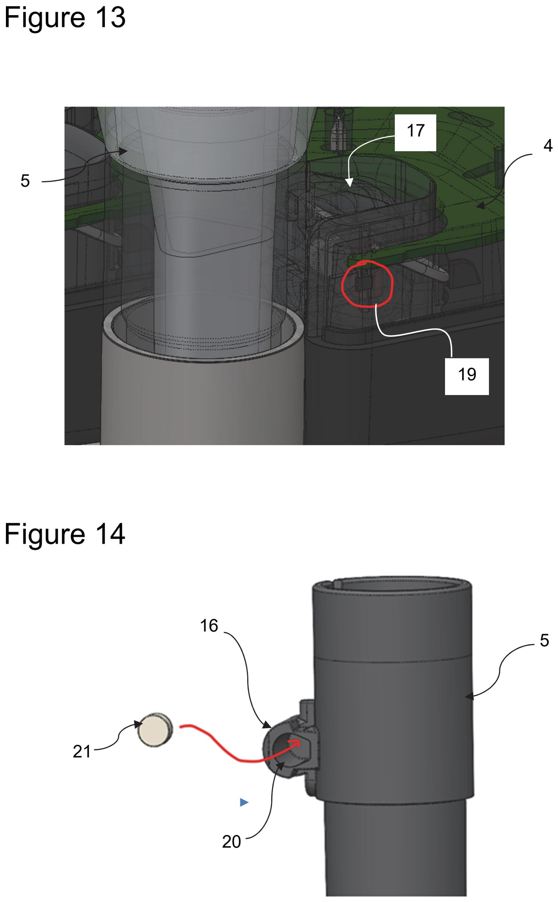

Referring to **Figure 13****,** the holster 4 has internal magnetic sensor means, for example a series of Hall-effect sensors 19, each immediately adjacent a respective one of the docking recesses 17, to detect when the teat cups 5 are docked in the holster and when they are not. Referring to **Figure 14****,** each docking hub 16 has a recess 20 into which a disc shaped magnet 21 is potted. It is the magnet 21 that in each case is detected by the respective Hall-effect sensor when the teat cup 5 has been docked.

When during the milking of a herd the sensors 19 detect that one or more of the cups 5 is disengaged from the holster, eg after recently emerging from the housing, the milking machine 1 automatically turns on vacuum and/or pulsation pressure in readiness for milking a cow. This means that the vacuum and pulsation pressures are not running unnecessarily, even if they are running as needed for other bails.

### Cartridge Arrangement

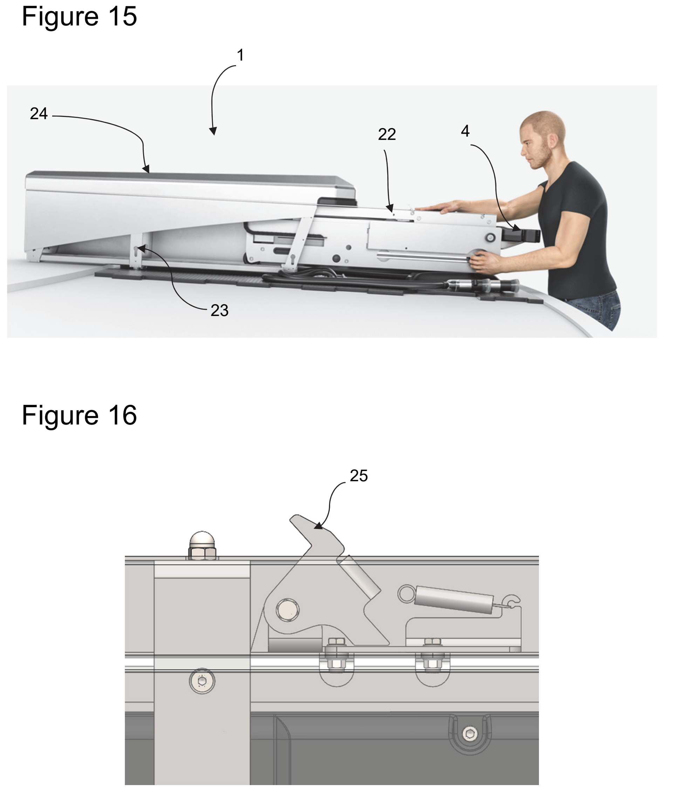

Referring to **Figure 15****,** the milking machine 1 comprises three sections, namely a cartridge 22, a chassis 23 and a removable lid 24. The cartridge incorporates the extender arm 3, the holster 4, the rollers 14, 18, and the cords 8.

The cartridge 22 can be slid into the chassis 23 on rollers (eg wheels), and later removed for maintenance or repair. When the cartridge is removed, a replacement or substitute cartridge of the same type can be rolled into the chassis so that maintenance and repair does not need to put the milking platform out of action. Prior to removing the cartridge 22, the teat-cups 5 and milk tubes 9 may be disconnected and then connected to the new cartridge for use in the same was the previous cartridge.

Preferably the lid 24 has side walls so that it substantially covers the cartridge and chassis when they are in use.

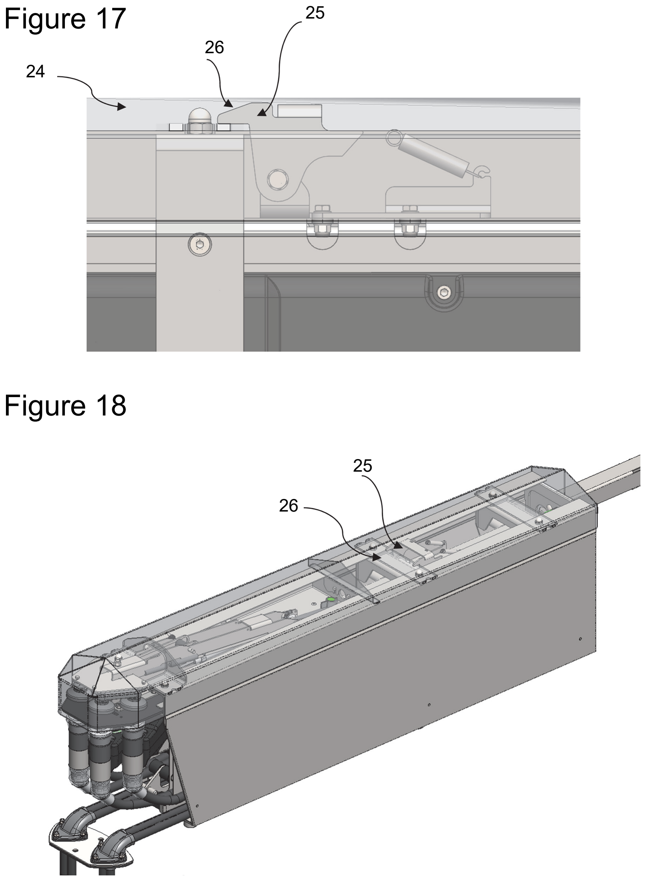

Referring to **Figure 16****,** the chassis incorporates a clamp 25 shown when in an open or unlocked position. It is adapted to pivot downwards to a locking position as shown in **Figure 17** in response to the cartridge contacting it when the cartridge is fed into the chassis. When in the locking position, the clamp 25 engages the underside of the lid 24 to hold it down. The arrangement is such that the lid 24 cannot be removed until reverse movement of the cartridge causes the clamp 25 to pivot back to its Figure 16 position.

**Figure 18** shows the position of the clamp 25 in relation to the rest of the cartridge 22 including a horizontal cross-plate 26 that it pivots down onto when in a locked disposition.

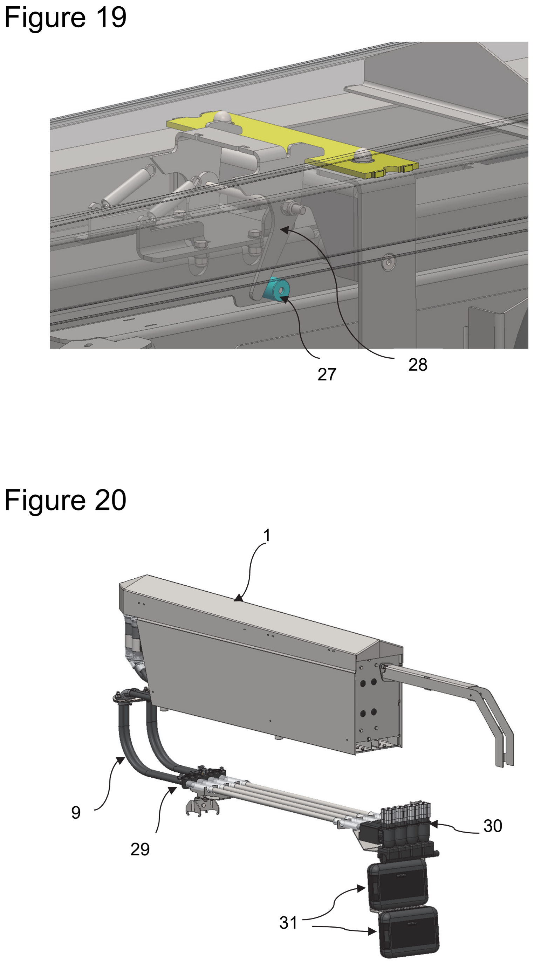

**Figure 19** illustrates further detail of the locking mechanism in that the cartridge incorporates a spigot 27 which, when the cartridge is moved into the chassis, pushes against a lever arm 28 of the clamp 25 to pivot the clamp to its locking position. When the cartridge is moved out again so that the spigot 27 moves away from the lever arm 28, spring pressure on the clamp causes it to automatically pivot to its unlocked disposition.

### Beneath the Platform

Referring to **Figure 20****,** the milk tubes 9 extend under the platform's deck (not shown) to a manifold 29. From there the milk is piped to an analyser device 30 which is adapted to measure various parameters of the milk indicative of its quality, including the presence of mastitis or other health issues that the cow may have. For example, if the analyser device 30 detects a high bacterial content, then this may indicate that the cow has mastitis or some other disease, and the milking machine generates an alert for this, which may be linked to the identity of the cow that the milk came from.

As indicated, logic controllers 31 may also be arranged beneath the deck for providing electronic control of the milking machine 1 and the bail it is in.

From the analyser device the milk may be piped to a milk meter which determines how much milk is yielded by each cow or by a herd of cows. In this way the productivity of individual cows and/or all cows using the milking machine, can be readily determined. From the meter the milk is piped to a bulk storage vat.

### Steam Cleaning of Teat Cups

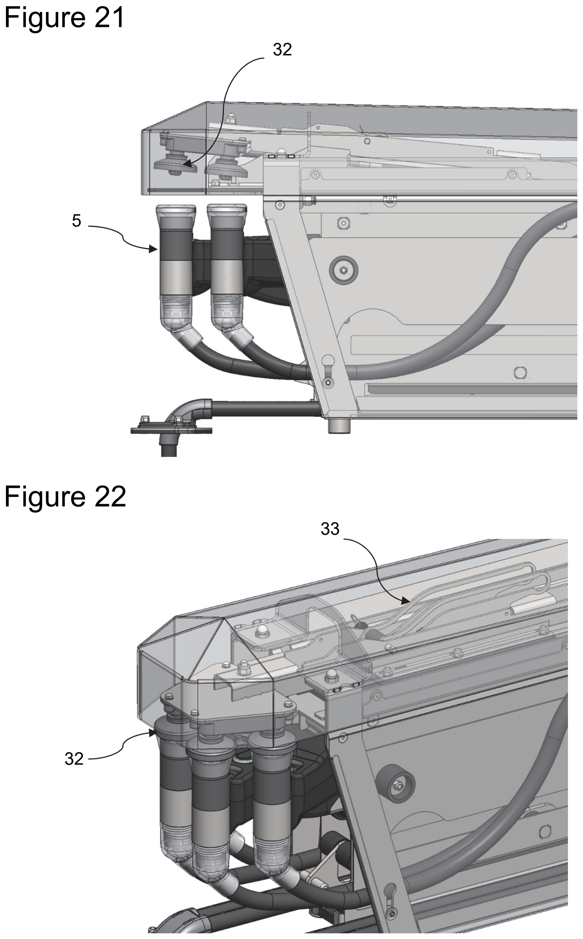

Referring to **Figure 21****,** when the teat cups have been returned to a stowed position in the housing in between milking each cow, a set of four washer-covers 32 moves forwards and drops down onto and closes the opening of the teat cups 5. A steam applicator (not shown) then emits a burst or jet of steam via steam conduits (not shown) through the washer-covers such that the steam enters and disinfects the interior of the cups. Because the cups are closed by the washer-covers, the steam is contained and is unable to present a burn hazard outside the cup. Following disinfection, the washer-covers withdraw leaving the teat cups ready for milking another cow.

Referring to **Figure 22****,** the set of washer-covers 32 is driven forwards and down a ramp 33 to engage the cups 5 as above. Reverse movement when disinfecting is done lifts the covers off the cups and retracts them. The use of the ramp 32 means that a forwards-backwards force applied to the set of covers conveniently also serves to move them up and down.

While some forms of the invention have been described by way of example, it should be appreciated that modifications and improvements can be made without departing from the scope of the following claims.

In terms of disclosure, this document envisages and hereby posits any feature mentioned herein in combination with itself or any other feature or features mentioned herein, even if the combination is not claimed.

## Claims

1. Apparatus for delivering milking teat cups to an animal to be milked, comprising:
• a housing;
• an extender arm;
• a holster;
• a set of teat-cups removably engaged with the holster;
• connector threads; and
• a set of rollers;
arranged such that:
∘ the extender arm is adapted to carry the holster and teat-cups between a retracted stowed position and an extended operative position where the holster and teat-cups are supportively presented by the arm entirely outside the housing;
∘ each thread is engaged with and extends at least partially around a respective one of the rollers, is adapted to extend to and beyond the holster, is connected to a respective one of the teat-cups, and can be drawn in to the holster by substantially linear movement of the respective roller;
∘ each roller is adapted to allow its respective thread to extend sufficiently to enable the teat-cup connected to it to be removed from the holster by hand and engaged with the animal's teat for milking; and
∘ each roller is adapted to be driven by a ram to move to draw-in its respective thread to pull the teat-cup connected to that thread to a docking position of the holster to catch the teat-cup as it drops from the teat when in use.

2. Apparatus according to claim 1, wherein each connector thread is arranged such that it can extend outside the housing to a different degree to the others.

3. Apparatus according to claim 1 or 2, wherein each teat-cup has a protruding docking hub, and the thread for that teat-cup extends from the hub to and through a respective docking port of the holster.

4. Apparatus according to claim 3, wherein each roller is adapted to pull a respective one of the docking hubs into its docking port.

5. Apparatus according to claim 3 or 4, wherein each docking hub comprises a generally tapered lower portion shaped to fit into its respective docking port.

6. Apparatus according to any one of the preceding claims, wherein each roller is adapted to move backwards and forwards to facilitate drawing-in and playing-out of the threads and cups.

7. Apparatus according to any one of the preceding claims, adapted to sense when milking of a cow has finished and, in response to this, to automatically turn off vacuum pressure to milk tubes connected with the teat-cups and to simultaneously or subsequently cause the threads to pull the teat-cups into docked engagement with the holster.

8. Apparatus according to any one of the preceding claims, comprising electronic control means adapted to determine when milking has finished and, in response to this, to terminate vacuum pressure to the teat-cups while maintaining pulsation pressure to them to a lesser degree than when a cow is being milked, such that the teat-cups remain engaged with the teats but can be pulled from them more easily than when the cow is being milked.

9. Apparatus according to any one of the preceding claims, comprising milk tubes and tube turn guides, arranged such that each tube turn guide is engaged or engageable with one of the milk tubes and is adapted to move linearly and independently of the other tube turn guides such that each milk tube can simultaneously extend from the housing to a different degree.

10. Apparatus according to claim 18, wherein:
a) wherein each tube turn guide is rotatable; and/or
b) each tube turn guide comprises a roller; and/or.
c) each milk tube incorporates a first conduit adapted to work under vacuum to channel milk away from the respective teat-cup and a second conduit adapted to transmit milking pulsation pressure to that teat-cup.

11. Apparatus according to any one of the preceding claims comprising teat-cup sensor means adapted to detect when one or more of the teat-cups are docked in the cradle.

12. Apparatus according to claim 1 comprising:
• milk tubes; and
• tube turn guides;
arranged such that:
∘ each milk tube is connected to a respective one of the teat-cups and is engaged or adapted to engage with and proceed around a respective one of the tube turn guides to double back on itself when in a stowed disposition within the housing; and
∘ each tube turn guide is adapted to move at least linearly in sympathy with the extender arm so that when the extender arm moves outwards the associated milk tube plays out and, when the extender arm retracts, the milk tube returns to its stowed disposition.

13. Apparatus according to claim 1, comprising:
• a teat-cup sensor; and
• a vacuum switch;
arranged such that:
∘ the sensor is adapted to detect when the teat-cups are engaged with the cradle; and
∘ the switch is adapted to turn on vacuum pressure to the teat-cups when the sensor detects the teat-cups are disengaged with the cradle and to turn off such pressure when the sensor detects that they are engaged with the cradle.

14. Apparatus according to claim 1, comprising:
• a chassis;
• a lid; and
• a cartridge having:
▪ an extender arm adapted to move between retracted stowed and extended operative positions; and
▪ a holster adapted to move with the extender arm;
arranged such that:
∘ the lid is adapted to be releasably engaged with the chassis to substantially cover the cartridge;
∘ the cartridge is adapted to be moved on cartridge rollers to a docked position inside the chassis; and
∘ the cartridge is also adapted to be subsequently reversibly moved by way of the cartridge rollers to locate it clear of the chassis.

15. Apparatus according to claim 1, comprising:
• teat-cup washer covers; and
• a cleaning fluid applicator;
arranged such that:
∘ the teat-cup washer covers are adapted to move to each engage and close a respective one of the teat-cups;
∘ the cleaning fluid applicator is adapted to emit cleaning fluid into the teat cups to disinfect them; and
∘ the teat cup washer covers are adapted to move clear of the teat-cups when they have been disinfected by the cleaning fluid.
